# EUROPÄISCHE PATENTSCHRIFT

(11) **EP 0 335 360 B1**
(45) Veröffentlichungstag und Bekanntmachung des Hinweises auf die Patenterteilung: **02.06.1993**
(21) Anmeldenummer: 89105510.5
(22) Anmeldetag: 29.03.1989
(51) Int. Cl.: B60R 22/36

(54) **Gurtaufroller**
Seat belt retractor
Enrouleur de ceinture

(30) Priorität: 29.03.1988 DE 3810656; 16.03.1989 DE 3908666
(43) Veröffentlichungstag der Anmeldung: 04.10.1989
(73) Patentinhaber: TRW REPA GMBH, 73553 Alfdorf (DE)
(72) Erfinder: Föhl, Artur, D-7060 Schorndorf (DE)
(74) Vertreter: Degwert, Hartmut, Dipl.-Phys.

(56) Entgegenhaltungen:
- FR-A- 2 413 914
- GB-A- 2 073 008
- US-A- 3 955 774

## Beschreibung

Die Erfindung betrifft einen Gurtaufroller für ein Kraftfahrzeug-Sicherheitsgurt-Rückhaltesystem mit einem fahrzeugsensitiven und gurtbandsensitiven Sperrmechanismus, der eine gehäusefeste Sperrverzahnung und eine dieser gegenüberliegende, an einer Seitenfläche der Gurtwickelwelle exzentrisch zu dieser schwenkbar gelagerte Sperrklinke aufweist, die durch eine Rückholfeder in ihre Ruhelage außer Eingriff mit der Sperrverzahnung vorgespannt ist und fahrzeugsensitiv in Sperreingriff mit der Sperrverzahnung verschwenkbar ist durch einen Steuernocken an einer relativ zur Gurtwickelwelle verdrehbaren Steuerscheibe, die an ihrem Außenumfang mit Steuerzähnen versehen ist, die mit einer durch einen fahrzeugsensitiven Sensor einsteuerbaren Steuerklinke zusammenwirken.

Gurtaufroller dieser Art sind in zahlreichen Ausführungen bekannt. Die galtungsbildende FR-A-2 413 914 offenbart zum Beispiel eine solche Ausführungsform. Die Entwicklung von Gurtaufrollern hat von einfachen, eine direkte Einsteuerung der Sperrklinke durch ein Pendel oder dergleichen bewirkenden Sperrmechanismen zu aufwendigen, sogenannten indirekt einsteuernden, sowohl fahrzeugsensitiven als auch gurtbandsensitiven Sperrmechanismen geführt. Diese erfüllen die strengen Forderungen nach einer niedrigen Ansprechschwelle und sicheren Funktion durch Vermeiden des Zahnprellens beim Aufeinandertreffen der Zahnspitzen von Sperrklinke und Sperrverzahnung. Bei solchen indirekt wirkenden Sperrmechanismen ist eine Steuerscheibe vorgesehen, die über einen Steuernocken die Sperrklinke in Sperreingriff mit der Sperrverzahnung drückt, wenn sie relativ zur Gurtspule verdreht wird. Diese Relativdrehung kommt fahrzeugsensitiv dadurch zustande, daß die Steuerscheibe in ihrer Drehbewegung durch eine Steuerklinke angehalten wird, die in die Bahn der Steuerzähne am Außenumfang der Steuerscheibe durch einen Trägheitssensor eingesteuert wird. Gurtbandsensitiv kommt diese Relativdrehung dadurch zustande, daß die Steuerscheibe zugleich als Trägheitsscheibe ausgebildet oder einer Trägheitsscheibe fest zugeordnet ist, so daß sie bei plötzlicher Beschleunigung der Gurtwickelwelle gegenüber dieser zurückbleibt.

Obwohl derartige Gurtaufroller alle an sie gestellten Forderungen vollauf erfüllen und auch durch Massenherstellungstechniken kostengünstig gefertigt werden können, liegt der vorliegenden Erfindung die Aufgabe zugrunde, sie in zweierlei Hinsicht weiter zu verbessern: Zum einen soll der sogenannte Sperrweg, welcher dem Drehwinkel der Gurtwickelwelle vom Beginn der Auslösung des Sperrvorgangs bis zum Eintreten der Sperrwirkung entspricht, verkleinert werden, und zum anderen soll diese Funktionsverbesserung mit einer vereinfachten und die Herstellungskosten senkenden Konstruktion gepaart sein.

Diese Aufgabe wird bei dem gattungsgemäßen Gurtaufroller erfindungsgemäß dadurch gelöst, daß die Sperrklinke in ihrem Schwerpunkt gelagert ist und die gurtbandsensitive Sperrung allein unter der Wirkung von Massenträgheitskräften erfolgt. Der Erfindung liegt der Gedanke zugrunde, daß es für die gurtbandsensitive Sperrung der Mitwirkung einer Steuerscheibe nicht bedarf. Bei gurtbandsensitiver Einsteuerung der Sperrklinke über den Steuernocken der Steuerscheibe ist der oben definierte Sperrweg unter anderem durch den Drehwinkel der Relativdrehung der Steuerscheibe zur Gurtwickelwelle bestimmt, der benötigt wird, um den vollständigen Steuerhub des Steuernockens auszuführen. Ein deutlich kürzerer Sperrweg läßt sich durch die erfindungsgemäße Ausbildung des Gurtaufrollers bei gurtbandsensitiver Sperrung erreichen, weil die Sperrklinke bei plötzlicher Beschleunigung der Gurtwickelwelle bestrebt ist, in ihrer Stellung zu verharren und durch die Drehung der Gurtwickelwelle folglich unmittelbar in Sperreingriff mit der Sperrverzahnung verschwenkt wird. Als weiterer Vorteil ergibt sich eine Vereinfachung und Gewichtsersparnis an der Steuerscheibe, die nun nicht mit einem Massekörper wie eine Trägheitsscheibe oder dergleichen für die gurtbandsensitive Einsteuerung versehen werden muß. Dieser Vorteil fällt besonders dann ins Gewicht, wenn der Gurtaufroller mit einer Rückstrammvorrichtung ausgestattet wird, die bei einem Rückstrammvorgang eine mit einer Trägheitsscheibe kombinierte Steuerscheibe extrem hohen Beanspruchungen aussetzt. Bei Kombination des erfindungsgemäßen Gurtaufrollers mit einer Rückstrammvorrichtung ist weiterhin von Vorteil, daß nach Beendigung des Rückstrammvorganges eine unverzögerte Einsteuerung in den Sperrzustand stattfindet. Unmittelbar nach Beendigung eines Rückstrammvorganges ist in dem Gurtsystem eine hohe Spannung aufgebaut, die bestrebt ist, die Wickelwelle des Gurtaufrollers mit hoher Drehbeschleunigung in Gurtabzugsrichtung in Drehung zu versetzen. Diese Rückdrehung der Gurtwickelwelle muß durch den Sperrmechanismus verhindert werden, der daher extrem schnell ansprechen muß. Diese Forderung erfüllt der erfindungsgemäß ausgebildete Sperrmechanismus, da die Sperrklinke auf die hohe Drehbeschleunigung der Gurtwickelwelle unmittelbar nach Beendigung des Rückstrammvorganges mit einer sofortigen Einsteuerung in die Sperrverzahnung anspricht.

Bei der gurtbandsensitiven Einsteuerung der Sperrklinke in die Sperrverzahnung besteht kaum die Gefahr, daß bei einem Aufeinandertreffen der Zahnspitzen von Sperrklinke und Sperrverzahnung die Sperrklinke abprellt, weil ihre Einsteuerung bereits dann erfolgt, wenn die Gurtwickelwelle noch keine hohe Drehgeschwindigkeit aufweist. Um aber selbst im Falle eines solchen Abprellens der Sperrklinke das Eintreten einer Sperrwirkung zu gewährleisten, ist gemäß einer vorteilhaften Weiterbildung der Erfindung eine zweite Sperrklinke am axialen Ende der Gurtwickelwelle exzentrisch schwenkbar gelagert und gegenüber der ersten Sperrklinke in Umfangsrichtung um einen Winkel versetzt, der einem Bruchteil des Teilungsschrittes der gehäusefesten Sperrverzahnung entspricht. Wenn also die eine Sperrklinke mit ihrer Zahnspitze auf eine Zahnspitze der Sperrverzahnung trifft, so trifft die Zahnspitze der anderen Sperrklinke mit Sicherheit in eine Zahnlücke. Ein eventuelles Zahnprellen hat daher keinerlei schädliche Auswirkung.

Besonders vorteilhaft ist es, wenn beide Sperrklinken einander gleich ausgebildet sind, vorzugsweise in Draufsicht von der Form eines Parallelogramms, dessen eine spitze Ecke die Spitze eines Sperrzahnes bildet, und wenn die beiden Sperrklinken einander annähernd diametral gegenüberliegend angeordnet werden. Auf diese Weise wird der verfügbare Raum optimal genutzt, da mechanisch hoch beanspruchbare Sperrklinken in einem annähernd zylindrischen Volumen, dessen Höhe der Breite eines die Sperrverzahnung tragenden Ringes entspricht, untergebracht werden können. Während bei geringer Beanspruchung die Sperrwirkung durch nur eine Sperrklinke erzeugt wird, können bei extrem hoher Unfallbeanspruchung, bei welcher eine gewisse Verformung von Sperrverzahnung und Sperrklinken eintritt, die Belastungen annähernd gleichmäßig von beiden Sperrklinken aufgenommen werden, wenn das Maß der Versetzung der Sperrklinken gegeneinander in Umfangsrichtung klein genug gewählt ist.

Weitere vorteilhafte Ausführungsformen der Erfindung sind in den Unteransprüchen angegeben.

Weitere Merkmale und Vorteile der Erfindung ergeben sich aus der folgenden Beschreibung einer bevorzugten Ausführungsform und aus der Zeichnung, auf die Bezug genommen wird.

In der Zeichnung zeigen:
- Fig. 1: eine perspektivische schematische Ansicht eines Gurtaufrollers in aufgeklappter Darstellung;
- Fig. 2 bis 5: schematische Seitenansichten des Gurtaufrollers, welche die Funktion des Sperrmechanismus in verschiedenen Funktionszuständen veranschaulichen;
- Fig. 6: einen Längsschnitt des in Fig. 1 gezeigten Gurtaufrollers;
- Fig. 7: eine Seitenansicht einer weiteren Ausführungsform des Gurtaufrollers im Ruhezustand;
- Fig. 8: eine Seitenansicht analog Fig. 7, jedoch für den aktivierten Zustand;
- Fig. 9: einen axialen Schnitt längs Linie IX-IX in Fig. 7;
- Fig. 10: einen axialen Teilschnitt längs Linie X-X in Fig. 7; und
- Fig. 11: eine auseinandergezogene Perspektivansicht der in den Fig. 7 bis 10 gezeigten Ausführungsform.

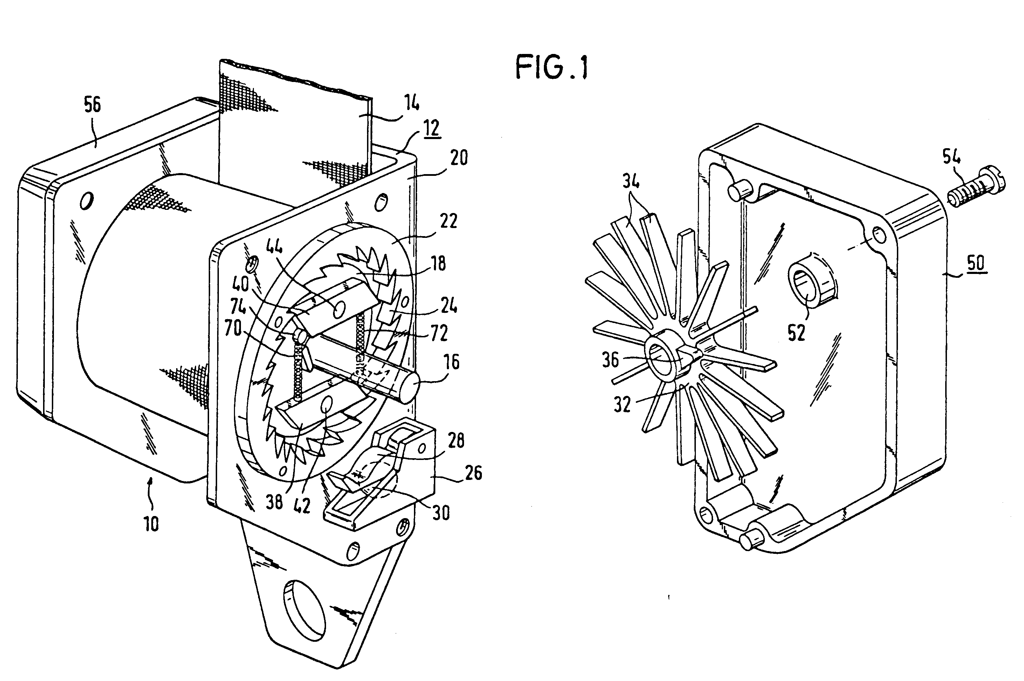

In Fig. 1 ist ein Gurtaufroller perspektivisch bei abgenommener und aufgeklappter Gehäusekappe von der Seite des Sperrmechanismus her gezeigt. Der allgemein mit 10 bezeichnete Gurtaufroller weist ein Gehäuse 12 in Form eines U-förmigen Rahmens auf, in dessen Seitenplatten eine Gurtwickelwelle 18 drehbar gelagert ist, auf welcher das Gurtband 14 aufgewickelt ist. Die Gurtwickelwelle besitzt einen Wellenfortsatz 16, der aus einer Seitenfläche der Gurtwickelwelle 18 und aus dem Gehäuse 12 herausragt. An der Seitenplatte 20 des Gehäuses 12 ist ein Ringteil 22 befestigt, welches mit einer Innenverzahnung versehen ist, die eine gehäusefeste Sperrverzahnung 24 bildet. Weiterhin ist an der Seitenplatte 20 des Gehäuses 12 ein offenes Lagergehäuse 26 für eine darin schwenkbar gelagerte Steuerklinke 28 befestigt. Die Steuerklinke 28 liegt auf einer Metallkugel 30 auf, die in dem Lagergehäuse 26 gehalten ist und einen Trägheitssensor bildet.

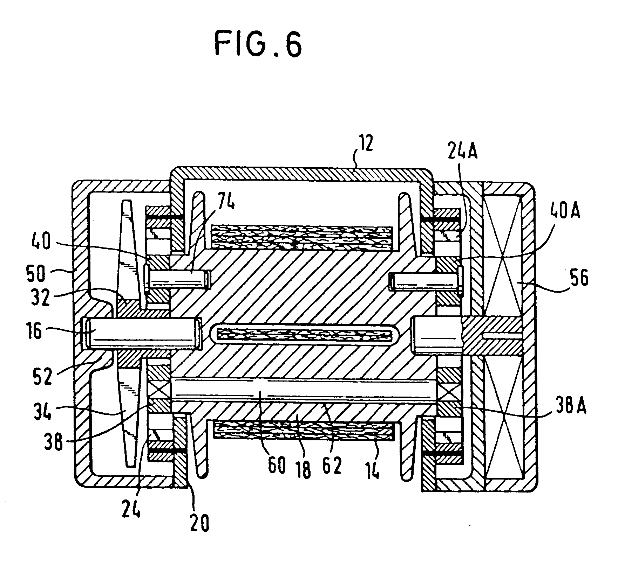

Auf dem Wellenfortsatz 16 ist eine Steuerscheibe 32 drehbar gelagert. Diese Steuerscheibe 32 besteht aus einer Lagernabe, von der Steuerzähne 34 sternförmig abstehen, und einem an die Lagernabe angeformten Steuernocken 36. An der Seitenfläche der Gurtwickelwelle 18 sind zwei in Draufsicht annähernd parallelogrammförmige Sperrklinken 38, 40 durch Befestigung an je einem Wellenende 42 bzw. 44 einer in der Gurtwickelwelle drehbar gelagerten Welle (Fig. 6) schwenkbar gelagert.

Die in Fig. 1 abgenommen dargestellte Gehäusekappe 50 ist an ihrer Innenseite mit einer Lagerbuchse 52 versehen, in welcher das Ende des Wellenfortsatzes 16 leichtgängig gelagert ist. Die Gehäusekappe 50 wird mittels Schrauben 54 an der Seitenplatte 20 des Gehäuses 12 befestigt. An der anderen Seitenplatte des Gehäuses 12 ist in ähnlicher Weise eine Baugruppe 56 befestigt, die in üblicher Weise eine Aufwickelfeder des Gurtaufrollers aufnimmt.

Der in Fig. 6 gezeigte Längsschnitt läßt erkennen, daß der Sperrmechanismus des Gurtaufrollers symmetrisch ausgebildet ist. Zusätzlich zu der Sperrverzahnung 24 und den Sperrklinken 38, 40 auf der einen Seite der Gurtwickelwelle 18 sind auf der anderen Seite eine entsprechende Sperrverzahnung und zwei Sperrklinken 38A, 40A vorgesehen. Die Sperrklinken 38 und 38A sind durch eine Welle 60 starr miteinander verbunden, die in einer axialen Bohrung 62 der Gurtwickelwelle 18 drehbar gelagert ist. Die Sperrklinken 38, 38A sind formschlüssig auf die Enden der Welle 60 aufgesetzt und beispielsweise durch Verstemmen daran befestigt. Die beiden Sperrklinken 40, 40A sind in analoger Weise durch eine Welle starr miteinander verbunden. Die Sperrverzahnungen 24, 24A sowie die Sperrklinken 38 und 38A sowie 40 und 40A sind jeweils miteinander fluchtend angeordnet.

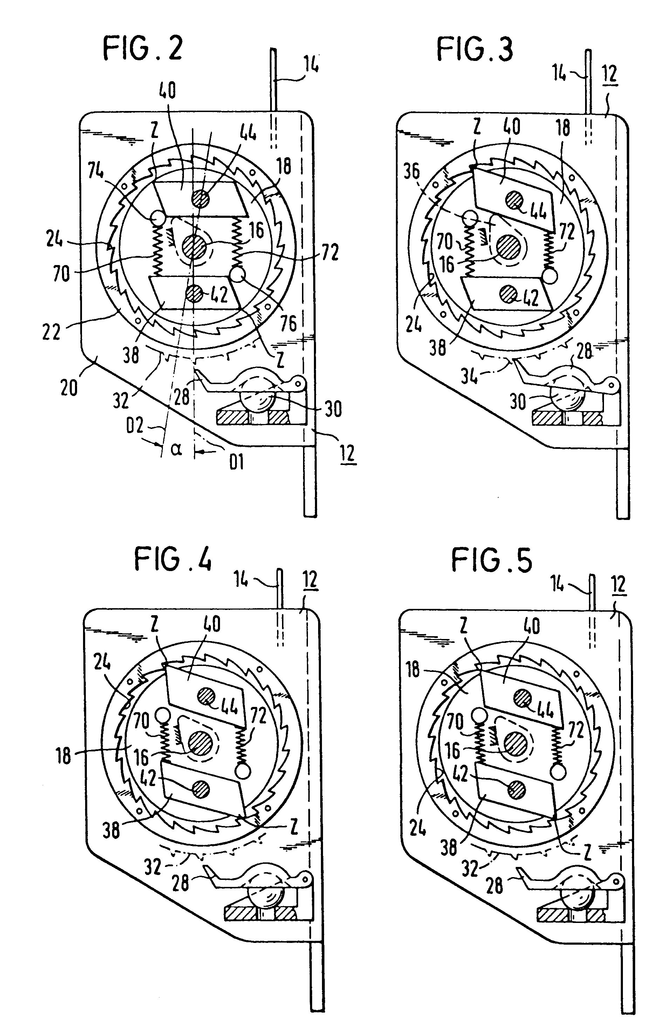

Besonderheiten des Sperrmechanismus bei dem erfindungsgemäßen Gurtaufroller werden nun unter Bezugnahme auf die Fig. 2 bis 5 beschrieben.

Jede der Sperrklinken 38, 38A und 40, 40A ist in ihrem Schwerpunkt gelagert. Jede dieser Sperrklinken ist in Draufsicht parallelogrammförmig und weist je einen durch eine spitze Ecke der Parallelogrammform gebildeten Sperrzahn Z auf. Auf der von der Sperrverzahnung 24 abgewandten Seite stützt sich auf jeder Sperrklinke 38, 40 eine Druckfeder 70 bzw. 72 mit ihrem einen Ende ab, deren anderes Ende an einem in der Seite der Gurtwickelwelle 18 befestigten Widerlager 74 bzw. 76 abgestützt ist, welches gleichzeitig als Anschlag für die benachbarte Sperrklinke 40 bzw. 38 dient. Die Druckfedern 70, 72 halten die Sperrklinken 38, 40 elastisch in ihrer durch die Widerlager 74, 76 definierten Ruhestellung außer Eingriff mit der Sperrverzahnung 24.

Fig. 2 zeigt die Sperrklinken 38, 40 im Ruhezustand. Die gegenüberliegenden, entsprechenden Sperrklinken 38A, 40A befinden sich in analoger Ruhestellung.

Die Sperrklinken 38, 40 (und 38A, 40A) liegen einander nur annähernd diametral gegenüber. In Fig. 2 sind zwei Diametrallinien D1 und D2 gezeigt, von denen die Linie D1 durch die Achse des Wellenfortsatzes 16 und durch die Achse des Lagerzapfens 42 verläuft, während die Linie D2 durch die Achse des Wellenfortsatzes 16 und die Achse des Lagerzapfens 44 verläuft. Die beiden Diametrallinien D1 und D2 sind um einen Winkel gegeneinander verdreht, der einem Bruchteil der Zahnteilung der Sperrverzahnung 24 entspricht. Die Zahnspitzen Z der Sperrklinken 38, 40 (und 38A, 40A) sind also in Umfangsrichtung der Gurtwickelwelle 18 gegeneinander um einen Winkel versetzt, der einem Bruchteil des Teilungsschrittes der Sperrverzahnung 24 entspricht.

Fig. 3 zeigt die fahrzeugsensitive Sperrung durch Einsteuern der Sperrklinke 40 in Sperreingriff mit der Sperrverzahnung 24. Der Steuernocken 36 der Steuerscheibe 32, die in den Fig. 2 bis 5 nur angedeutet ist, ist mit der Steuerscheibe gegenüber der Gurtwickelwelle 18 um einige Grad verdreht, da die Steuerscheibe 32 durch die über die Kugel 30 angehobene Steuerklinke 28, welche vor einem Steuerzahn 34 einfällt, in ihrer Drehbewegung angehalten wird. Durch die Relativdrehung zwischen Gurtwickelwelle 18 und Steuerscheibe 32 entfernt sich der Steuernocken 36 von dem seine Ruhestellung definierenden Anschlag und drückt die Sperrklinke 40 radial auswärts, so daß sie verschwenkt wird und mit ihrem Sperrzahn Z in eine Zahnlücke der Sperrverzahnung 24 eingesteuert wird. Die Sperrklinke 38 verbleibt in ihrer Ruhestellung.

Fig. 4 zeigt die gurtbandsensitive Einsteuerung der Sperrklinke 40 in die Sperrverzahnung 24. Die hierzu erforderliche Verschwenkung der Sperrklinke 40 erfolgt allein unter der Wirkung ihrer Massenträgheit, da sie in ihrem Schwerpunkt gelagert ist. Bei plötzlicher Drehbeschleunigung der Gurtwickelwelle 18 ist die Sperrklinke 40 bestrebt, ihre Lage im Raume beizubehalten, so daß sie bei Weiterdrehung der Gurtwickelwelle 18 im gewünschten Sinne verschwenkt wird. In gleicher Weise wird auch die Sperrklinke 38 verschwenkt. Die Sperrklinke 40 fällt jedoch mit ihrer Zahnspitze Z in den Grund einer Zahnlücke zwischen zwei aufeinanderfolgenden Zähnen der Sperrverzahnung 24, während die Sperrklinke 38 mit ihrer Zahnspitze Z etwa in der Mitte zwischen zwei benachbarten Zähnen der Sperrverzahnung 24 zur Anlage kommt.

Bei dem in Fig. 5 gezeigten Funktionszustand trifft die Zahnspitze Z der Sperrklinke 40 genau auf eine Spitze der Sperrverzahnung 24. Ein etwaiges Abprellen der Sperrklinke 40 kann die unmittelbare Herstellung der Sperrwirkung aber nicht in Frage stellen, da gleichzeitig die Sperrklinke 38 mit ihrer Zahnspitze Z in eine Zahnlücke zwischen zwei benachbarten Zähnen der Sperrverzahnung 24 trifft und bei anschließender Relativdrehung zwischen Gurtwickelwelle 18 und Sperrverzahnung 24 um nur wenige Grad die Sperrklinke 38 in Sperreingriff mit der Sperrverzahnung 24 einfällt.

Bei der beschriebenen Ausführungsform sind die Sperrklinken 38, 40 bzw. 38A, 40A unabhängig voneinander bewegbar. Gemäß einer zeichnerisch nicht dargestellten Weiterbildung sind die Bewegungen der Sperrklinken durch geeignete Verbindungsmittel miteinander synchronisiert.

Das Maß der Versetzung der beiden Sperrklinken 38, 40 bzw. 38A, 40A in Umfangsrichtung gegeneinander wird in Abhängigkeit von der Zahngeometrie so bestimmt, daß einerseits bei einem eventuellen Auftreffen von zwei Zahnspitzen aufeinander die jeweils andere Sperrklinke mit ihrer Zahnspitze mit Sicherheit nicht gleichfalls auf eine Zahnspitze trifft, andererseits bei einem Abprellen der einen Sperrklinke aber der Drehwinkel, bis die andere Sperrklinke in eine Zahnlücke einrastet, möglichst klein ist. Bei extrem hoher Beanspruchung des Sperrmechanismus wird dann die Blockierlast von beiden Sperrklinken aufgenommen, da eine gewisse plastische Verformung der Funktionsteile des Sperrmechanismus auftritt.

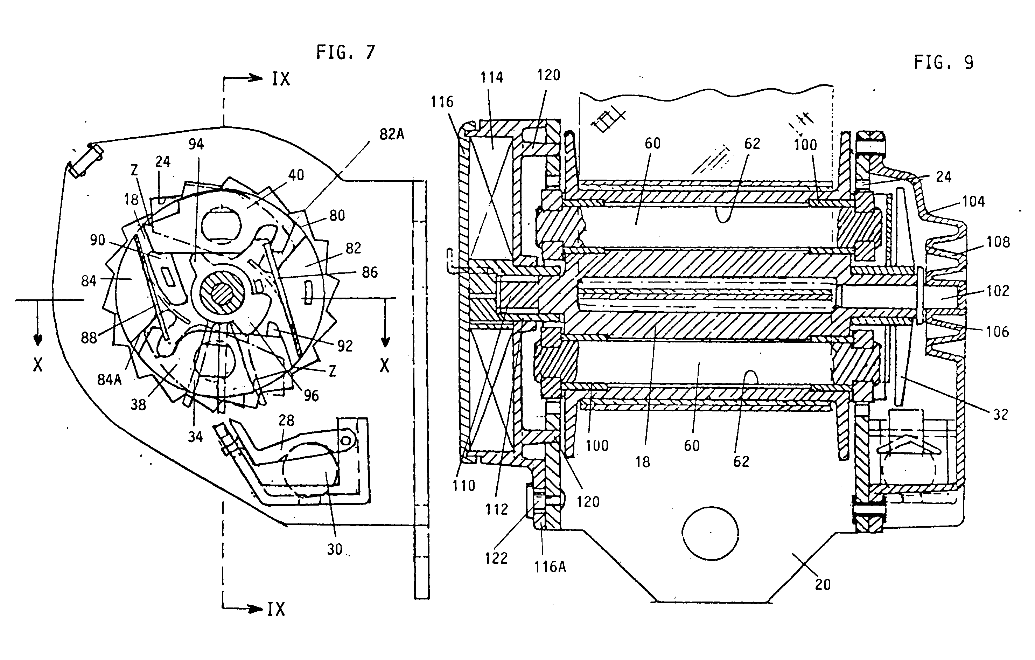

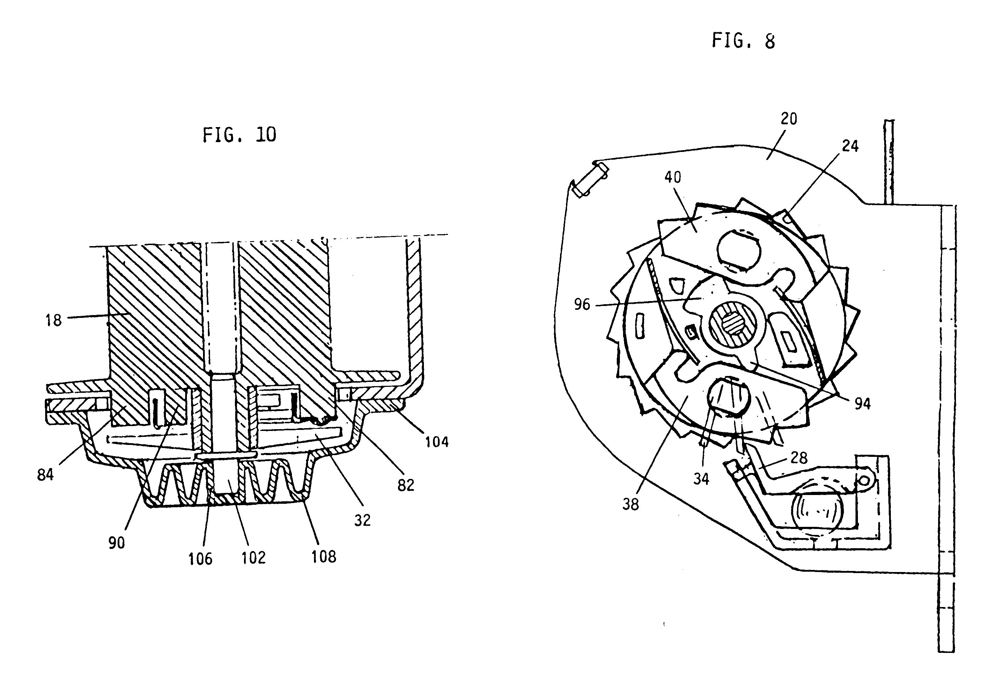

Bei der in den Fig. 7 bis 10 gezeigten Ausführungsform sind wiederum zwei Paare von Sperrklinken 38, 38A und 40, 40A vorgesehen. Diese Sperrklinken sind jeweils in ihrem Schwerpunkt gelagert und besitzen einen kreisrunden Außenumfang, der in die kreisrunde Außenkontur 80 der Gurtwickelwelle 18 eingeschrieben ist. Jede Sperrklinke 38, 38A, 40, 40A ist in einem Freiraum angeordnet, der zwischen zwei in Draufsicht annähernd segmentförmigen axialen Fortsätzen 82, 84 der Gurtwickelwelle 18 gebildet ist. Auch der Außenumfang der axialen Fortsätze 82, 84 ist in die kreisförmige Außenkontur 80 der Gurtwickelwelle 18 eingeschrieben. Die axialen Fortsätze 82, 84 sind so dimensioniert, daß sie in Axialrichtung auswärts jeweils bis über die gehäusefeste Sperrverzahnung 24 hinausragen. Fig. 7 zeigt die Sperrklinken 38, 40 in ihrer Ruhelage, in die sie durch eine aus einem Federblechteil 85 abgebogene Blattfeder 86 bzw. 88 beaufschlagt werden, die an dem benachbarten axialen Fortsatz 82 bzw. 84 verankert ist. Fig. 8 zeigt die Sperrklinken 38, 40 in ihrem aktivierten, in Richtung der Sperrverzahnung 24 ausgelenkten Zustand. Die Ruhelage der Sperrklinken 38, 40 wird durch weitere axiale Ansätze 90, 92 der Gurtwickelwelle 18 bestimmt, an denen die benachbarte Sperrklinke 40 bzw. 38 elastisch in Anlage gehalten wird. Die Steuerscheibe 32 trägt an einer Nabe zwei einander annähernd diametral gegenüberliegend angeordnete Steuernocken 94, 96, von denen der erste die Sperrklinke 40 und der zweite die Sperrklinke 38 fahrzeugsensitiv betätigt, wenn die Steuerklinke 28 in die Steuerzähne 34 der Steuerscheibe 32 einfällt.

Die Sperrklinken 38, 38A und 40, 40A sind jeweils paarweise durch eine Welle 60 starr miteinander verbunden, die in einer Lagerbohrung 62 der Gurtwickelwelle 18 gelagert ist. In die axialen Enden jeder Lagerbohrung 62 ist jeweils eine Lagerbuchse 100 aus elastisch nachgiebigem Material eingesetzt. Die Nachgiebigkeit der Lagerung jeder Welle 60 ist so ausgelegt, daß unter Blockierlast beide Sperrklinkenpaare sperrend in eine Zahnlücke der gehäusefesten Sperrverzahnung 24 eingreifen, obwohl die Angriffsflächen Z der Sperrklinken 38, 38A gegenüber den Angriffsflächen Z der Sperrklinken 40, 40A bezüglich der Teilung der Sperrverzahnung 24 in Umfangsrichtung gegeneinander um etwa einen Bruchteil des Teilungsschrittes versetzt sind. Bei einem Blockiervorgang werden zwar zunächst nur zwei Sperrklinken 38, 38A oder 40, 40A in die Sperrverzahnung 24 sperrend eingesteuert, jedoch werden bei dem anschließenden Anwachsen der Blockierlast die Lagerbuchsen 100 in Umfangsrichtung verformt, so daß auch das jeweils andere Sperrklinkenpaar die Blockierlast in die gehäusefeste Sperrverzahnung 24 einleitet (Fig. 8). Eine weitere Besonderheit dieser Ausführungsform besteht darin, daß unter hoher Blokkierlast die Sperrklinken sich mit ihrer von der jeweiligen Angriffsfläche abgewandten Rückenfläche an der benachbarten Schulter 82A bzw. 84A des axialen Fortsatzes 82 bzw. 84 abstützen. Durch diese Abstützung der Sperrklinken unter hoher Blockierlast an den axialen Fortsätzen 82, 84 der Gurtwickelwelle wird die Lagerung der Sperrklinkenpaare entlastet und insbesondere vor extremer Belastung geschützt, so daß die Sperrklinken auch nach einer hohen Unfallbelastung noch leichtgängig genug gelagert sind, um durch die zugeordnete Rückstellfeder 86 bzw. 88 wieder in die Ruhestellung zurückbewegt zu werden.

Eine weitere Besonderheit der beschriebenen Ausführungsform ist aus den Fig. 9 und 10 ersichtlich. Sie betrifft die Lagerung der Gurtwickelwelle 18. Auf der Seite der Steuerscheibe 32 ist die Gurtwickeiwelle 18 an ihrem axialen Ende mit einem Lagerzapfen 102 versehen, der leichtgängig drehbar in einer in einen Gehäusedeckel 104 eingeformten Lagerbuchse 106 gelagert ist. Die Lagerbuchse 106 ist von einer doppelten konzentrischen Sicke 108 umgeben, die gleichfalls in den Gehäusedeckel 104 eingeformt ist und durch welche die Lagerbuchse 106 in Radialrichtung nachgiebig gehalten ist.

Auf der gegenüberliegenden Seite ist die Gurtwickelwelle 18 mittels eines Lagerfortsatzes 110 in einer Lagerbuchse 112 gelagert, die von einem die Aufrollfeder 114 umschließenden Gehäusedeckel 116 gehalten wird, der in Radialrichtung verschiebbar und elastisch an der benachbarten Seitenwand des Gehäuses 20 befestigt ist. Der Gehäusedeckel 116 besitzt auf seiner dem Gehäuse 20 zugewandten Seite angeformte, elastisch auslenkbare Stifte 120, die jeweils mit ihrem freien Ende in eine zugehörige Bohrung der Seitenwand des Gehäuses 20 eingesetzt sind. Weiterhin ist der Gehäusedeckel 116 an seinem Außenumfang mit einem flanschartigen Ansatz 116A versehen, in dem radial gerichtete Langlöcher angebracht sind, durch welche hindurch in der Seitenplatte des Gehäuses 20 verankerte Bundzapfen 122 eingreifen, um den Gehäusedeckel 116 in Radialrichtung verschiebbar an der Seitenwand des Gehäuses 20 zu befestigen. Die Gurtwickelwelle 18 ist also mit einer leichtgängigen Feinlagerung ausgestattet, die unter Last elastisch nachgibt, so daß sich die Gurtwickelwelle 18 mit ihren axialen Fortsätzen 82, 84 und mit den Sperrklinken 38, 38A sowie 40, 40A auf der gehäusefesten Sperrverzahnung 24 abstützt, die dann als Groblager wirkt. Dieser Zustand, in dem beide Sperrklinkenpaare die Blockierlast in die Sperrverzahnung 24 einleiten und die Gurtwickelwelle 18 sich mit ihrem Außenumfang an der gehäusefesten Sperrverzahnung 24 abstützt, ist in Fig. 8 veranschaulicht.

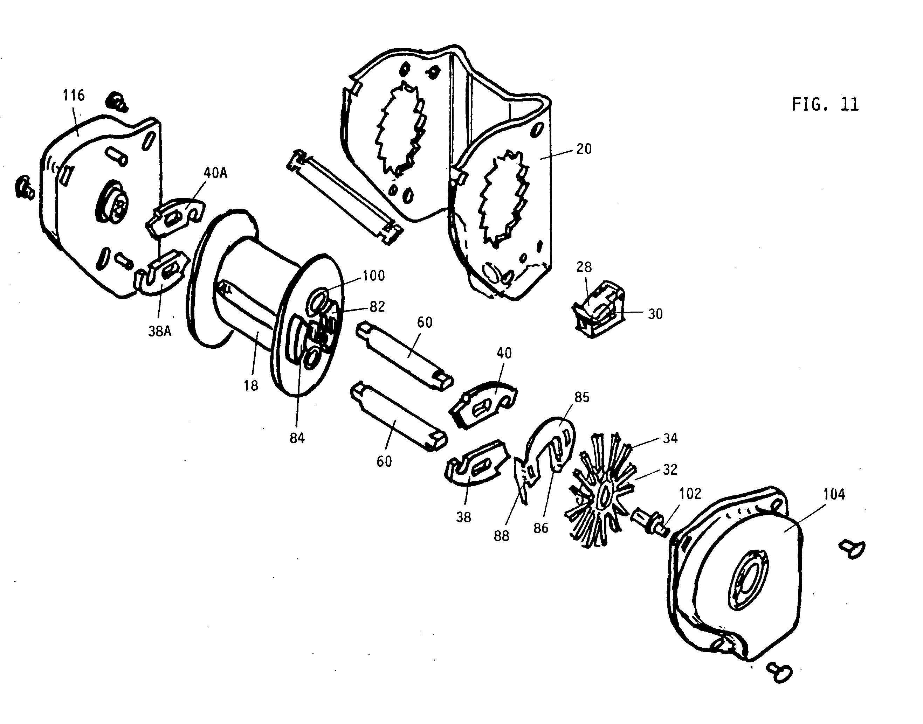

Wie aus Fig. 11 ersichtlich ist, erfolgt die Montage der verschiedenen Bestandteile des Sicherheitsgurtaufrollers in einem Gehäuse 20 mit eingezogener Grundplatte und winklig ausgestellten Seitenwänden, die ein radiales Einsetzen der Gurtwickelwelle mit daran vormontierten Bauteilen ermöglichen und anschließend durch Geraderichten der Grundplatte des Gehäuses aufgerichtet und parallelgestellt werden.

## Patentansprüche

1. Gurtaufroller (10) für ein Kraftfahrzeug-Sicherheitsgurt-Rückhaltesystem, mit einem fahrzeugsensitiven und gurtbandsensitiven Sperrmechanismus, der eine gehäusefeste Sperrverzahnung (24) und wenigstens zwei dieser gegenüberliegende, an einer Seitenfläche (20) der Gurtwickelwelle (18) exzentrisch zu dieser schwenkbar gelagerte Sperrklinken (38, 40) aufweist, die federnd in ihre Ruhelage außer Eingriff mit der Sperrverzahnung (24) vorgespannt und fahrzeugsensitiv in Sperreingriff mit der Sperrverzahnung (24) verschwenkbar sind durch je einen Steuernocken (36) an einer relativ zur Gurtwickelwelle (18) verdrehbaren Steuerscheibe (32), die an ihrem Außenumfang mit Steuerzähnen (34) versehen ist, die mit einer durch einen fahrzeugsensitiven Sensor einsteuerbaren Steuerklinke (28) zusammenwirken, **dadurch gekennzeichnet,** daß die Sperrklinken (38, 40, 38A, 40A) jeweils zumindest annähernd in ihrem Schwerpunkt gelagert sind und die gurtbandsensitive Sperrung allein unter der Wirkung von Massenträgheitskräften erfolgt, daß die Angriffsflächen (Z) der Sperrklinken (38, 38A, 40, 40A) an der Seite der Gurtwickelwelle (18) gegeneinander in Umfangsrichtung um einen Winkel versetzt sind, der einem Bruchteil des Teilungsschrittes der gehäusefesten Sperrverzahnung (24) entspricht.

2. Gurtaufroller nach Anspruch 1, **dadurch gekennzeichnet,** daß die Sperrklinke (38, 40, 38A, 40A) in Draufsicht die Form eines Parallelogramms aufweist, dessen eine spitze Ecke die Spitze (Z) eines Sperrzahnes bildet.

3. Gurtaufroller nach Anspruch 1, **dadurch gekennzeichnet,** daß die Sperrklinken (38, 38A, 40, 40A) einander annähernd diametral gegenüberliegend angeordnet sind.

4. Gurtaufroller nach einem der Ansprüche 1 bis 3, **dadurch gekennzeichnet,** daß die Sperrklinken (38, 38A, 40, 40A) untereinander gleich ausgebildet sind.

5. Gurtaufroller nach einem der Ansprüche 1 bis 4, **dadurch gekennzeichnet,** daß jede Sperrklinke (38, 38A, 40, 40A) durch eine Druckfeder (70, 72) in ihre Ruhestellung vorgespannt ist, welche sich mit ihrem einen Ende an der zugehörigen Sperrklinke (38, 40) und ihrem anderen Ende an einem Widerlager (74, 76) abstützt, das an der Seite der Gurtwickelwelle (18) befestigt ist und zugleich als Anschlag für die benachbarte Sperrklinke (38, 40) zur Definition ihrer Ruhestellung außer Eingriff mit der gehäusefesten Sperrverzahnung (24) wirkt.

6. Gurtaufroller nach einem der Ansprüche 1 bis 5, **dadurch gekennzeichnet,** daß die beiden Sperrklinken (38, 38A, 40, 40A) durch unterschiedlich starke Rückholfedern (70, 72) in ihre Ruhestellung vorgespannt sind.

7. Gurtaufroller nach einem der vorstehenden Ansprüche, **dadurch gekennzeichnet,** daß der Sperrmechanismus auf beiden Seiten der Gurtwickelwelle (18) je eine gehäusefeste Sperrverzahnung (24, 24A) und zwei mit dieser zusammenwirkende Sperrklinken (38, 38A, 40, 40A) aufweist und daß je zwei auf der einen bzw. der anderen Seite der Gurtwickelwelle (18) miteinander fluchtend angeordnete Sperrklinken starr durch eine Welle (60) miteinander verbunden sind, die in einer axialen Bohrung (62) der Gurtwickelwelle (18) drehbar gelagert ist.

8. Gurtaufroller nach Anspruch 7, **dadurch gekennzeichnet,** daß die je zwei Sperrklinken (38, 38A, 40, 40A) starr miteinander verbindenden Wellen (60) in solchem Maße nachgiebig in der Gurtwickelwelle (18) gelagert sind, daß zumindest unter Blockierlast jeweils beide auf derselben Seite der Gurtwickelwelle (18) angeordneten Sperrklinken trotz ihrer Versetzung in Umfangsrichtung bezüglich der Teilung der gehäusefesten Sperrverzahnung (24) die Blockierlast in diese Sperrverzahnung einleiten.

9. Gurtaufroller nach Anspruch 8, **dadurch gekennzeichnet,** daß jede Welle (60) mittels wenigstens einer elastisch verformbaren Hülse (100) in der axialen Bohrung (62) der Gurtwickelwelle (18) gelagert ist.

10. Gurtaufroller nach einem der vorstehenden Ansprüche, **dadurch gekennzeichnet,** daß jede der Sperrklinken (38, 38A, 40, 40A) in einem Freiraum an der Seite der Gurtwickelwelle (18) gelagert ist, der in Umfangsrichtung zwischen zwei axialen Fortsätzen (82, 84) der Gurtwickelwelle (18) gelegen ist, die sich mindestens bis zur axial äußeren Begrenzung der Sperrverzahnung (24) erstrecken.

11. Gurtaufroller nach Anspruch 10, **dadurch gekennzeichnet,** daß die axialen Fortsätze (82, 84) in die Umfangskontur (80) der Gurtwickelwelle (18) eingeschrieben sind.

12. Gurtaufroller nach den Ansprüchen 9, 10 und 11, **dadurch gekennzeichnet,** daß jede Sperrklinke (38, 38A, 40, 40A) auf ihrer von der Angriffsfläche (Z) abgewandten Seite eine Rückenfläche aufweist, die unter Blockierlast aufgrund der nachgiebigen Lagerung der Wellen (60) an einer passend geformten Abstützschulter (82A, 84A) des benachbarten axialen Fortsatzes (82, 84) der Gurtwickelwelle (18) in Anlage gelangt.

13. Gurtaufroller nach Anspruch 12, **dadurch gekennzeichnet,** daß die Sperrklinken (38, 38A, 40, 40A) in ihrer Ruhelage mit ihrem Außenumfang in die kreisförmige Außenkontur (80) der Gurtwickelwelle (18) eingeschrieben sind.

14. Gurtaufroller nach einem der vorstehenden Ansprüche, **dadurch gekennzeichnet,** daß die Gurtwickelwelle (18) an ihren beiden axialen Enden in je einem radial unter Last nachgiebigen Feinlager (102, 106, 110, 112) gelagert ist.

15. Gurtaufroller nach Anspruch 14, **dadurch gekennzeichnet,** daß er auf der einen axialen Seite der Gurtwickelwelle einen den fahrzeugsensitiven Sensor und die Steuerscheibe umschließenden Gehäusedeckel (104) aufweist, wobei dieser mit einer radial nachgiebig gehaltenen Lagerbuchse (106) für einen Lagerzapfen (102) der Gurtwickelwelle (18) versehen ist.

16. Gurtaufroller nach Anspruch 15, **dadurch gekennzeichnet,** daß die Lagerbuchse (106) in einer sie konzentrisch umgebenden Sicke (108) des Gehäusedeckels (104) gehalten ist.

17. Gurtaufroller nach einem der Ansprüche 14 bis 16, **dadurch gekennzeichnet,** daß eine Aufwickelfeder in einem Gehäusedeckel (116) angeordnet ist, und daß an dem Gehäusedeckel (116) eine Lagerbuchse (112) für das benachbarte axiale Ende (110) der Gurtwickelwelle (18) gehalten ist und daß der Gehäusedeckel (116) radial verschiebbar an der benachbarten Seitenwand des Gurtaufrollergehäuses (20) befestigt ist.

18. Gurtaufroller nach Anspruch 17, **dadurch gekennzeichnet,** daß der Gehäusedeckel (116) mit angeformten, elastisch auslenkbaren und axial einwärts gerichteten Stiften (120) versehen ist, die an ihrem freien Ende in je eine zugeordnete Bohrung der Seitenwand des Gurtaufrollergehäuses (20) eingesetzt sind.

## Claims

1. Belt retractor (10) for a motor vehicle safety belt restraining system comprising a vehicle-sensitive and webbing-sensitive locking mechanism having a housing-fixed ratchet toothing (24) and at least two locking pawls (38, 40) opposite thereto which are pivotally mounted on a side face (20) of the belt coiling shaft (18) eccentrically to the latter and which are biased resiliently into their rest position out of engagement with the ratchet toothing (24) and are pivotal in vehicle-sensitive manner into locking engagement with the ratchet toothing (24) by a respective cam (36) on a cam disc (32) which is rotatable relatively to the belt coiling shaft (18) and is provided at its outer periphery with control teeth (34) which cooperate with a control pawl (28) drivable by a vehicle-sensitive sensor, characterized in that the locking pawls (38, 40, 38A, 40A) are each mounted at least approximately in their centre of gravity and the webbing-sensitive locking takes place solely under the action of inertia forces, that the engagement faces (Z) of the locking pawls (38, 38A, 40, 40A) on the side of the belt coiling shaft (18) are offset with respect to each other in the peripheral direction by an angle which corresponds to a fraction of the pitch of the housing-fixed ratchet toothing (24).

2. Belt retractor according to claim 1, characterized in that the locking pawl (38, 40, 38A, 40A) has in plan view the form of a parallelogram of which an acute corner forms the tip (Z) of a ratchet tooth.

3. Belt retractor according to claim 1, characterized in that the locking pawls (38, 38A, 40, 40A) are arranged approximately diametrically opposite each other.

4. Belt retractor according to any one of claims 1 to 3, characterized in that the locking pawls (38, 38A, 40, 40A) are made identical to each other.

5. Belt retractor according to any one of claims 1 to 4, characterized in that each locking pawl (38, 38A, 40, 40A) is biased into its rest position by a pressure spring (70, 72) which bears with its one end on the associated locking pawl (38, 40) and with its other end on an abutment (74, 76) which is secured to the side of the belt coiling shaft (18) and acts at the same time as stop for the adjacent locking pawl (38, 40) for defining its rest position out of engagement with the housing-fixed ratchet toothing (24).

6. Belt retractor according to any one of claims 1 to 5, characterized in that the two locking pawls (38, 38A, 40, 40A) are biased into their rest position by return springs (70, 72) of different strength.

7. Belt retractor according to any one of the preceding claims, characterized in that the locking mechanism comprises on both sides of the belt coiling shaft (18) a housing-fixed ratchet toothing (24, 24A) and two locking pawls (38, 38A, 40, 40A) cooperating therewith and that each pair of locking pawls arranged in alignment on the one and other side of the belt coiling shaft (18) are rigidly connected together by a shaft (60) which is rotatably mounted in an axial bore (62) of the belt coiling shaft (18).

8. Belt retractor according to claim 7, characterized in that the shafts (60) each connecting two locking pawls (38, 38A, 40, 40A) rigidly together are mounted in the belt coiling shaft (18) yieldably to such an extent that at least under locking load two locking pawls disposed on the same side of the belt coiling shaft (18) in spite of their offsetting in the peripheral direction with respect to the pitch of the housing-fixed ratchet toothing (24) introduce the locking load into said ratchet toothing.

9. Belt retractor according to claim 8, characterized in that each shaft (60) is mounted by means of at least one elastically deformable sleeve (100) in the axial bore (62) of the belt coiling shaft (18).

10. Belt retractor according to any one of the preceding claims, characterized in that each of the locking pawls (38, 38A, 40, 40A) is mounted in a free space at the side of the belt coiling shaft (18) which is disposed in the peripheral direction between two axial extensions (82, 84) of the belt coiling shaft (18) which extend at least up to the axial outer boundary of the ratchet toothing (24).

11. Belt retractor according to claim 10, characterized in that the axial extensions (82, 84) are incorporated into the peripheral contour (80) of the belt coiling shaft (18).

12. Belt retractor according to any one of claims 9, 10 and 11, characterized in that each locking pawl (38, 38A, 40, 40A) comprises on its side remote from the engagement face (Z) a backface which under locking load due to the yieldable mounting of the shafts (60) comes into engagement with a matchingly formed support shoulder (82A, 84A) of the adjacent axial extension (82, 84) of the belt coiling shaft (18).

13. Belt retractor according to claim 12, characterized in that the locking pawls (38, 38A, 40, 40A) are incorporated in their rest position with their outer periphery into the circular outer contour (80) of the belt coiling shaft (18).

14. Belt retractor according to any one of the preceding claims, characterized in that the belt coiling shaft (18) is mounted at each of its two axial ends in a precision bearing (102, 106, 110, 112) yieldable radially under load.

15. Belt retractor according to claim 14, characterized in that it comprises on the one axial side of the belt coiling shaft a housing cover (104) surrounding the vehicle-sensitive sensor and the control disc, the housing cover (104) being provided with a radially yieldably held bearing bush (106) for a bearing pin (102) of the belt coiling shaft (18).

16. Belt retractor according to claim 15, characterized in that the bearing bush (106) is held in a bead (108) of the housing cover (104) concentrically surrounding said bush.

17. Belt retractor according to any one of claims 14 to 16, characterized in that a coiling spring is disposed in a housing cover (116) and that on the housing cover (116) a bearing bush (112) for the adjacent axial end (110) of the belt coiling shaft (18) is mounted and that the housing cover (116) is mounted radially displaceably on the adjacent side wall of the belt retractor housing (20).

18. Belt retractor according to claim 17, characterized in that the housing cover (116) is provided with integrally formed elastically deflectable axially inwardly directed pins (120) which at their free end are each inserted into an associated bore of the side wall of the belt retractor housing (20).

## Revendications

1. Enrouleur de ceinture (10) pour un système de retenue d'une ceinture de securité d'un véhicule automobile, comportant un mécanisme de blocage sensible au véhicule et sensible à la ceinture, qui présente une denture de blocage (24) solidaire du boîtier et au moins deux cliquets d'arrêt (38, 40) opposés à celle-ci, montés pivotants, sur une face latérale (20) de l'arbre (18) d'enroulement de la ceinture, de manière excentrique par rapport à celui-ci, lesquels cliquets sont précontraints élastiquement dans leur position de repos, lorsqu'ils ne sont pas en prise avec la denture de blocage (24), et pivotants de manière sensible au véhicule, lorsqu'ils sont en prise avec la denture de blocage (24), grâce à une came de commande (36) chacun d'un disque de commande (32) tournant par rapport à l'arbre (18) d'enroulement de la ceinture, ce disque étant pourvu sur son pourtour extérieur de dents de commande (34) qui coopèrent avec un cliquet de commande (28) commandé par un capteur sensible au véhicule, caractérisé en ce que les cliquets d'arrêt (38, 40, 38A, 40A) sont suspendus chacun au moins à peu près en leur centre de gravité, et le blocage sensible à la ceinture s'effectue uniquement sous l'effet de forces d'inertie, en ce que les surfaces d'attaque (Z) des cliquets d'arrêt (38, 38A, 40, 40A), sur le côté de l'arbre (18) d'enroulement de la ceinture, sont décalées l'une par rapport à l'autre dans la direction périphérique, d'un angle qui correspond à une fraction du pas de division de la denture de blocage (24) solidaire du boîtier.

2. Enrouleur de ceinture selon la revendication 1, caractérisé en ce que le cliquet d'arrêt (38, 40, 38A, 40A) présente, en vue de dessus, la forme d'un parallélogramme dont un angle aigu forme la pointe (Z) d'une dent de blocage.

3. Enrouleur de ceinture selon la revendication 1, caractérisé en ce que les cliquets d'arrêt (38, 38A, 40, 40A) sont disposés à peu près diamétralement opposés les uns aux autres.

4. Enrouleur selon l'une des revendications 1 à 3, caractérisé en ce que les cliquets d'arrêt (38, 38A, 40, 40A) sont de configuration identique.

5. Enrouleur de ceinture selon l'une des revendications 1 à 4, caractérisé en ce que chaque cliquet d'arrêt (38, 38A, 40, 40A) est précontraint, dans sa position de repos, par un ressort de pression (70, 72) qui prend appui par l'une de ses extrémités contre le cliquet d'arrêt (38, 40) correspondant, et par son autre extrémité contre une butée (74, 76) qui est fixée sur le côté de l'arbre (18) d'enroulement de la ceinture, et qui sert en même temps de butée pour le cliquet d'arrêt voisin (38, 40) afin de définir sa position de repos lorsqu'il n'est pas en prise avec la denture de blocage (24) solidaire du boîtier.

6. Enrouleur de ceinture selon l'une des revendications 1 à 5, caractérisé en ce que les deux cliquets d'arrêt (38, 38A, 40, 40A) sont précontraints dans leur position de repos, par des ressorts de rappel (70, 72) de force différente.

7. Enrouleur de ceinture selon l'une des revendications précédentes, caractérisé en ce que le mécanisme de blocage présente, de part et d'autre de l'arbre (18) d'enroulement de la ceinture, une denture de blocage (24, 24A) solidaire du boîtier, et deux cliquets d'arrêt (38, 38A, 40, 40A) coopérant avec celle-ci, et en ce que deux cliquets d'arrêt, alignés sur un côté et sur l'autre côté de l'arbre (18) d'enroulement de la ceinture, sont reliés entre eux de manière rigide par un arbre (60) qui est monté tournant dans un perçage (62) axial de l'arbre (18) d'enroulement de ceinture.

8. Enrouleur de ceinture selon la revendication 7, caractérisé en ce que les arbres (60), reliant entre eux de manière rigide deux cliquets (38, 38A, 40, 40A), sont montés dans l'arbre (18) d'enroulement de ceinture, de manière suffisamment souple pour qu'au moins sous la charge de blocage, deux cliquets d'arrêt placés du même côté de l'arbre (18) d'enroulement de ceinture transmettent la charge de blocage à la denture de blocage (24) solidaire du boîtier, malgré leur décalage dans la direction périphérique, par rapport à la division de cette denture de blocage.

9. Enrouleur de ceinture selon la revendication 8, caractérisé en ce que chaque arbre (60) est monté dans le perçage axial (62) de l'arbre (18) d'enroulement de ceinture, par au moins un fourreau (100) déformable élastiquement.

10. Enrouleur de ceinture selon l'une des revendications précédentes, caractérisé en ce que chacun des cliquets d'arrêt (38, 38A, 40, 40A) et monté dans un espace libre sur le côté de l'arbre (18) d'enroulement de ceinture, qui est placé dans la direction périphérique, entre deux prolongements axiaux (82, 84) de l'arbre (18) d'enroulement de ceinture, lesquels se prolongent au moins jusqu'à la délimitation axiale et extérieure de la denture de blocage (24).

11. Enrouleur de ceinture selon la revendication 10, caractérisé en ce que les prolongements axiaux (82, 84) sont inscrits dans le contour périphérique (80) de l'arbre (18) d'enroulement de ceinture.

12. Enrouleur de ceinture selon les revendications 9, 10 et 11, caractérisé en ce que chaque cliquet d'arrêt (38, 38A, 40, 40A) présente sur sa face tournée à l'opposé de la surface d'attaque (Z), une surface arrière qui, sous la charge de blocage, vient s'appliquer contre un épaulement d'appui (82A, 84A) de forme adaptée, du prolongement axial (82, 84) adjacent de l'arbre (18) d'enroulement de ceinture, en raison de la suspension souple des arbres (60).

13. Enrouleur de ceinture selon la revendication 12, caractérisé en ce que les cliquets d'arrêt (38, 38A, 40, 40A) sont inscrits dans leur position de repos, avec leur pourtour extérieur, dans le contour extérieur (80) circulaire de l'arbre (18) d'enroulement de ceinture.

14. Enrouleur de ceinture selon l'une des revendications précédentes, caractérisé en ce que l'arbre (18) d'enroulement de ceinture est monté, à chacune de ses deux extrémités axiales, dans un palier fin (102, 106, 110, 112) cédant radialement lorsqu'il est sous charge.

15. Enrouleur de ceinture selon la revendication 14, caractérisé en ce qu'il présente sur l'un des côtés axiaux de l'arbre d'enroulement de ceinture, un capteur sensible au véhicule et le couvercle de boîtier (104) entourant le disque de commande, ce boîtier étant pourvu d'un coussinet (106) maintenu de façon souple radialement, pour un tourillon (102) de l'arbre (18) d'enroulement de ceinture.

16. Enrouleur de ceinture selon la revendication 15, caractérisé en ce que le coussinet (106) est maintenu dans une moulure (108), qui l'entoure concentriquement, du couvercle du boîtier (104).

17. Enrouleur de ceinture selon l'une des revendications 14 à 16, caractérisé en ce qu'un ressort d'enroulement est placé dans un couvercle de boîtier (116) et en ce qu'un coussinet (112) pour l'extrémité axiale (110) adjacente de l'arbre (18) d'enroulement de ceinture est fixé sur le couvercle de boitier (116), et en ce que le couvercle de boîtier (116) est fixé de manière à coulisser radialement, sur la paroi latérale adjacente du boîtier d'enrouleur de ceinture (20).

18. Enrouleur de ceinture selon la revendication 17, caractérisé en ce que le couvercle de boîtier (116) est pourvu de broches (120) venues de moulage, orientables élastiquement et dirigées axialement vers l'intérieur, lesquelles sont introduites, chacune à leur extrémité libre, dans un perçage associé de la paroi latérale du boîtier d'enrouleur de ceinture (20).
